# EUROPEAN PATENT APPLICATION

(11) **EP 4 717 345 A1**
(43) Date of publication of application: **01.04.2026**
(21) Application number: 24203154.0
(22) Date of filing: 27.09.2024
(51) Int. Cl.: B01D 53/62, B01D 53/83, B01J 8/18, B01J 19/00, B01J 19/18

(54) **REACTOR AND PROCESS FOR THE CARBONATION OF A GRANULAR MINERAL MATERIAL**

(71) Applicant: VITO NV, 2400 Mol (BE)
(72) Inventor: NIELSEN, Peter, 2400 Mol (BE); QUAGHEBEUR, Mieke, 2400 Mol (BE)
(74) Representative: V.O.

(57) **Abstract**

The present invention relates to a reactor for carbonating particles of a granular mineral material comprising: a gas supply and a carbonatable material supply configured to supply a COz-comprising gas and particles of a granular mineral material, respectively, to a reaction chamber having a rounded cross-section and comprising a first and a second inlet fluidly connected to the carbonatable material supply and the gas supply, respectively; a first outlet configured to remove carbonated particles having a first size from the reaction chamber; and vortex inducing means configured to, in use, induce a vortex-shaped flow to the CO₂-comprising gas and to entrain particles having a first size from the first inlet towards the first outlet. The invention further relates to a method for carbonating particles of a granular mineral material.

## Description

### Technical field

The present invention is related to a reactor for carbonation of a granular mineral material. The present invention is further related to a method for carbonating a granular mineral material, in particular a method using the reactor of the present invention.

### Background art

Large-scale sequestration of CO₂ has become an interesting and necessary operation, taking into account the impact of CO₂ on the environment and climate. A particularly interesting process for large-scale sequestration of CO₂ is the mineral carbonation of solid alkaline residue feedstocks. Frequently used feedstocks include alkaline waste residues, for example residues resulting from thermal processes (metal slags) which often contain calcium- and/or magnesium-based silicates, calcium- and/or magnesium oxides and hydroxides. Other frequently used feedstocks originate from construction and demolition activities.

Carbonation involves the uptake of CO₂ by alkaline materials and the permanent storage of CO₂ under the thermodynamically stable form of carbonates, in particular calcium carbonate or magnesium carbonate, depending on their presence in the alkaline material. More particularly, the compounds that can be carbonated include oxides or hydroxides of alkaline or alkaline earth metals, as well as calcium silicate and magnesium silicate.

The concrete industry is responsible for approx. 8 % anthropogenic CO₂ emissions. The clinker production requests significant amounts of natural resources, and its production involves a carbon-intensive and highly energy-consuming process. There are several solutions that have been proposed by the concrete industry. Amongst the most interesting, there is cement replacement with supplementary cementitious material (SCMs). In Europe, the average cement contains already 25 wt.% of SCMs. Another interesting solution involves carbon capture, also named CO₂-sequestration, which involves accelerated mineral or enforced carbonation.

Mineral carbonation involves the reaction between carbon dioxide and an alkaline based mineral comprising calcium and/or magnesium. The alkaline based mineral can be a natural one, but can also be a waste material. Mineral carbonation results in the sequestration of CO₂ and the transformation of waste into a valuable cementitious material - when waste materials are used.

This process simulates the natural process of CO₂ reaction with alkaline rocks to form carbonates. Whereas the reaction rate of natural carbonation is rather slow due to the low atmospheric concentration of CO₂, accelerated carbonation (i.e. enforced carbonation) is a fast CO₂ mineralization process capable of handling a high CO₂ concentration. In just a few hours, an almost complete carbonation can be achieved, forming calcium carbonate that precipitates as calcite and/or other polymorphs, and amorphous (alumina) silica gel. This gel exhibits strong pozzolanic properties, enabling a fast reaction with portlandite generated by Portland cement (PC) hydration in blended cement. For this reason, carbonated materials represent valuable novel supplementary cementitious materials (SCMs) with a strong potential for replacing conventional SCMs.

Current technologies to produce carbonation-derived SCM's (cSCMs) include wet carbonation, and semi-dry (moist) processes such as static carbonation and carbonation during milling. Wet carbonation requires separating the cSCM formed from the water/liquid, followed by drying of the the cSCM, and allows to produce a highly reactive cSCM. The process has a large water/liquid consumption, as well as a high energy consumption. Semi-dry (or moist) carbonation methods do not need the use of large amounts of liquid (water), but compared to the wet carbonation the SCM is less reactive because the amorphous silica is typically covered or connected to a layer of CaCO₃. Typically the CaCO₃ layer shields the layer of amorphous silica, thereby rendering the latter less accessible and therefore less reactive.

A milling step can be used to make the amorphous silica more accessible. However, it is difficult to obtain a homogenous distribution of the CaCO₃ and amorphous silica in the small particles by milling. A more homogeneous distribution of CaCO₃ and amorphous silica in a cSCM can be achieved by combining the carbonation step with a milling step. However, the time for optimal milling is often significantly different from the optimal time for mineral carbonation (seconds to minutes vs. half an hour to hours, respectively), which results in a very energy intensive and expensive process.

WO2023059777 discloses a method for preparing a carbonated supplementary cementitious material (cSCM). The method comprises the steps of adding water to a carbonatable material to form a carbonatable mixture with a moisture content between 0.1% and 99.99 % by weight, agitating the carbonatable mixture and carbonating the carbonatable mixture, thereby obtaining a first carbonated cementitious material. The first carbonated cementitious material is then milled to obtain a milled mixture, followed by a second carbonation step to carbonate the milled mixture for a duration between 1 minute and 24 hours thereby obtaining the cSCM. Carbonating of the carbonatable mixture and the milled mixture comprises flowing a gas comprising 5-100 vol. % CO₂ into the carbonatable and the milled mixture respectively, and maintaining a temperature comprised between 1 °C and 99 °C. The mean particle size (d₅₀) of the cSCM is between 1 µm and 25 µm, as measured by laser diffraction.

EP3744700 discloses a method for manufacturing a SCM and sequestering CO₂ by carbonating concrete fines. The concrete fines obtained from crushed concrete demolition waste are grained in a mill at 1-10 °C above the water dew point in a carbonating atmosphere provided by a gas containing 10 to 99 vol.% CO₂. The ground and partially carbonated concrete fines are then circulated in a fluidized bed reactor in contact with the carbonating atmosphere. The mill is connected to a separator allowing to recirculate particles of the concrete fines feed not ground fine enough so that only particles that are fine enough pass and go into the fluidized bed reactor. The particle size distribution determined by laser granulometry of the particles entering the reactor should have a d₉₀ of at most 500 µm. The fines ground in the mill have an average particle diameter between 10 and 50 µm. Particles with a size below 25 µm are typically filtered out in the first pass through the bag filter.

Disadvantages of the foregoing methods include the complexity of the method, which comprises several consecutive process steps, difficulties related to milling a moist mixture, and the high energy consumption. A further disadvantage of the latter process is that it is operated in a batch-wise manner.

### Summary of the invention

The present invention aims to overcome one or more of the above drawbacks. It is an aim to provide a reactor (i.e. an apparatus) and a method for dynamic carbonation of a granular mineral material in a single step.

It is an aim to provide a reactor and a method capable of controlling the degree of carbonation. Yet a further aim is to provide a reactor and a method that facilitate carbonation both at the exposed surface of the particles and least partially within their bulk (i.e. the interior of the particles) without significantly reducing the particle size of the granular mineral material.

It is a further aim of the present invention to provide a reactor and a method allowing to separate the carbonated particles based on their weight, density or size. More particularly, the present apparatus and method have as aim to separate larger/heavier particles from lighter/smaller particles in combination with the carbonation of at least the lighter/smaller particles.

The term "carbonation at least partially within the bulk of a particle" and "at least partially carbonated particles" are used interchangeably in the present disclosure, and are used to describe that at least a portion of the bulk (i.e. the interior, or the inner volume), such as at least 20 %, preferably at least 30 %, more preferably at least 50 %, such as at least 75 %, or at least 90 % of a particle is carbonated. The term "carbonation within the core" is used in the present disclosure for the carbonation of substantially the entire bulk (i.e. substantially 100 %) of a particle.

According to a first aspect of the present disclosure, there is provided a reactor for carbonating a granular mineral material as set out in the appended claims. It will be understood that since the granular mineral material can be carbonated in the reactor, the granular mineral material must comprise a carbonatable compound. The terms "granular material" and "particles of a material", "particles of a carbonatable material" and "carbonatable material" are used interchangeably in the present disclosure.

The reactor according to the first aspect comprises a reaction chamber, a gas supply and a carbonatable material supply. The gas supply is configured to supply a CO₂-comprising gas to the reaction chamber. The carbonatable material supply is configured to supply a granular mineral material to the reaction chamber.

The granular material comprises particles having a size within a first size range. Optionally, yet advantageously, the granular mineral material further comprises particles having a size within a second size range, wherein the first size range comprises sizes smaller than the sizes comprised within the second size range, wherein the particle size is measured by laser diffraction.

The term "size" in relation to particles is used interchangeably in the present disclosure for both the dimensions and the weight of particles having substantially the same density. Indeed, when particles have substantially the same density, particles having a higher weight than other particles are also having larger dimensions (i.e. sizes), than the other (lighter) particles.

Particle sizes in the present disclosure are expressed as the dimensions of the particles and are measured by means of laser diffraction, in particular laser diffraction performed according to standard ASTM B822-20 (2020).

Advantageously, for particles having a density of 3 g/cm³, the term "first size range" is used in the present disclosure for particles having a size equal to or lower than 100 µm, and consequently the term "second size range" is used for particles having a size higher than 100 µm.

The reaction chamber has a rounded cross-section. The reaction chamber has an upper portion and a lower portion. Consequently, since the entire reaction chamber has a rounded cross-section, the upper portion has a first rounded cross-section and the lower portion has a second rounded cross-section. The term "rounded cross-section" is used in the present disclosure for a cross-section which is substantially free of angles. Preferred but non-limiting examples include a circular cross-section and an ellipsoidal cross-section, wherein the ellipsoidal cross-section can be a regular or an irregular ellipsoid shape.

The reaction chamber comprises a first inlet, a second inlet, a first outlet and a vortex inducing means.

The first inlet is fluidly connected to the carbonatable material supply. In other words, a granular mineral material is meant to be supplied (introduced) from the carbonatable material supply in the reaction chamber via the first inlet.

The second inlet is fluidly connected to the gas supply. In other words, a CO₂-comprising gas is meant to be supplied (introduced) from the gas supply in the reaction chamber via the second inlet.

The first outlet is configured to remove at least partially carbonated particles of the granular mineral material from the reaction chamber. More particularly, the at least partially carbonated particles that are, in use, removed from the reaction chamber through or via the first outlet have size within the first size range.

The vortex inducing means is configured to, in use of the reactor, induce a vortex-shaped flow to the CO₂-comprising gas in the reaction chamber and to entrain the particles of the granular mineral material having a size within the first size range from the first inlet towards the first outlet. Advantageously, the vortex-shaped flow induced by the vortex inducing means and comprising the CO₂-comprising gas and any entrained particles follows the shape of the reaction chamber towards the first outlet.

More particularly, during use of the reactor, the granular mineral material is supplied to (introduced into) the reaction chamber from the carbonatable material supply via the first inlet, and the particles having a size within the first size range are then guided (transported, entrained) towards the first outlet of the reaction chamber by means of the vortex inducing means, more in particular by means of the vortex-shaped flow of the CO₂-comprising gas. This results in these particles being contacted with CO₂ during their transport through the reaction chamber from the first inlet to the first outlet, leading to an at least partial carbonation thereof.

Advantageously, the reactor, and in particular the reaction chamber, further comprises a first closing means configured to, in use, close the first outlet. This provides control of the residence time of the granular mineral material in the reaction chamber, and in particular of the particles entrained by the vortex-shaped flow of the CO₂-comprising gas (which are the particles having a size within the first size range). More specifically, the first closing means allows to control the duration during which these particles are contacted with CO₂, i.e. the carbonation duration, as well as the degree of carbonation of the particles having a size within the first size range.

Advantageously, the first outlet is arranged in the upper portion of the reaction chamber. Advantageously, the first inlet is arranged in the upper portion of the reaction chamber. Advantageously, the vortex inducing means is arranged in the lower portion of the reaction chamber. Arranging the vortex inducing means in the lower portion of the reaction chamber, and both the first inlet and the first outlet in the upper portion of the reaction chamber has the advantage of an improved entrainment of the particles, in particular those having a size within the first size range, in the vortex-shaped flow of the CO₂-comprising gas. The inventors have discovered that this results in a combination of an improved contact of these particles with CO₂ and thus a better (e.g. higher degree of) carbonation, and in a better separation of the particles having a size within the first size range from the particles having a size within the second size range - if the latter are present in the granular mineral material.

More specifically, this arrangement of first inlet, first outlet and vortex inducing means guides the vortex-shaped flow of the CO₂-comprising gas from the lower portion to the upper portion of the reaction chamber, while at the same time the introduced particles of the granular mineral material fall down to the lower portion of the reaction chamber under the impact of gravity. At a certain moment the particles will meet the vortex-shaped flow of the CO₂-comprising gas, wherein the particles having a size within the first size range are small (light) enough to be entrained with the vortex-shaped flow all the way to the first outlet and will undergo carbonation, while larger (heavier) particles tend to continue their downward movement and are entrained for a significantly reduced height, not reaching the first outlet. It will be understood that the heavier the particles are, the less their ability for entrainment in the vortex-shaped flow.

In addition, the inventors have further discovered that such an arrangement, in combination with the rounded cross-section of the reaction chamber, also reduces the presence of so-called "dead spots" within the reaction chamber (i.e. areas where particles sediment or are trapped without being processed), thereby reducing the risk of sedimentation of particles, in particular of particles having a size within the first size range (due to their improved entrainment).

Advantageously, the reaction chamber further comprises a second outlet configured to remove particles of the granular mineral material having a size within the second size range from the reaction chamber. Advantageously, the second outlet is arranged in the lower portion of the reaction chamber, for example in the bottom wall of the reaction chamber.

Advantageously, the reactor, and in particular the reaction chamber, further comprises a second closing means configured to, in use, close the first inlet. Advantageously, the reactor, and in particular the reaction chamber, further comprises third closing means configured to, in use, close the second inlet. The second and/or the third closing means, when present, prevent that particles and/or any CO₂-comprising gas can leave the reaction chamber towards the carbonatable material supply and the gas supply, respectively. In addition, the second and/or the third closing means, and in particular the second closing means, may contribute to a better control of the residence time, and thus of the carbonation reaction, of the particles of the granular mineral material within the reaction chamber.

Advantageously, the reactor further comprises a particle collector fluidly connected to the first outlet of the reaction chamber. In other words, the reaction chamber is such that during use thereof the at least partially carbonated particles having a size within the first size range exit the reaction chamber via the first outlet and may be collected in the particle collector.

Advantageously, the particle collector comprises a plurality of particle sub-collectors arranged at increasing distance from the first outlet of the reaction chamber. The plurality of particle sub-collectors are configured to, during use of the reactor, separate and collect the at least partially carbonated particles having a size within the first sizes into sub-sizes comprised within this first size range. Advantageously, the particle sub-collector arranged closest to the first outlet of the reaction chamber is configured to collect at least partially carbonated particles having the highest/largest sizes within the first size range, whereas the particle sub-collector arranged furthest from the first outlet of the reaction chamber is configured to collect at least partially carbonated particles having the lowest/smallest sizes within the first size range.

In other words, when the reactor comprises such a plurality of particle sub-collectors arranged at increasing distance from the first outlet of the reaction chamber, the reactor is not only configured for carbonating particles of a granular mineral material, in particular particles having a size within a predefined size range, but also for separating the at least partially carbonated particles according to their size.

Advantageously, the surface area of the rounded cross-section of the reaction chamber varies along a central axis of the reaction chamber. Advantageously, the upper portion of the reaction chamber has a first surface area and the lower portion of the reaction chamber has a second surface area, wherein the first surface area is smaller than the second surface area. For example, the reaction chamber can have the shape of a truncated cone, wherein the surface area decreases gradually from the lower portion to the upper portion of the reaction chamber.

Advantageously, the reactor further comprises a water supply configured to supply water to the reaction chamber. When the reactor comprises a water supply, the reaction chamber advantageously further comprises a third inlet fluidly connected to the water supply. Advantageously, water is supplied to the reaction chamber in the form of water vapour or steam.

According to a second aspect of the present disclosure, there is provided a method for carbonating a granular mineral material as set out in the appended claims. The method advantageously uses the reactor of the first aspect of the present invention. The granular mineral material is as described hereinabove.

The method comprises supplying a CO₂-comprising gas to the reaction chamber, inducing a vortex-shaped flow to the CO₂-comprising gas, supplying the granular material, at least partially carbonating at least a portion of the granular mineral material by contacting its particles with CO₂, and removing the at least partially carbonated particles from the reaction chamber.

The induced vortex-shaped flow of the CO₂-comprising gas entrains at least a portion of the particles of the granular mineral material in the vortex-shaped flow. More particularly, the vortex-shaped flow is induced so that the particles having a size within the first size range are entrained in the vortex-shaped flow, whereas the particles having a size within the second size range (i.e. the larger/heavier particles) - if comprised within the granular mineral material - are advantageously only entrained in the vortex-shaped flow to a certain extent as a result of the downward gravitational forces being higher than for the particles having a size within the first size range. In other words, the vortex-shaped flow is advantageously induced so that the particles of the granular material are separated in a portion having a size within a first size range and a portion having a size within a second size range.

The entrained particles are contacted with CO₂ present in the vortex-shaped flow, thereby at least partially carbonating them and thus forming carbonated particles.

The vortex-shaped flow moves the entrained particles in substantially the same circular direction and at substantially the same velocity, thereby generating a sliding contact between them. Additionally, the vortex-shaped flow also generates a sliding contact between the entrained particles and the reaction chamber, in particular the reaction chamber wall.

The inventors have surprisingly discovered that the size of the at least partially carbonated particles is substantially equal to or slightly higher than their size prior to carbonation and entrainment in the vortex-induced flow. The size increase after carbonation may vary with the nature/composition of the particles. The size of the carbonated particles may be at most 25 %, preferably at most 20 %, more preferably at most 10 % higher than the size prior to carbonation. The inventors have further surprisingly discovered that the vortex-induced carbonation takes place not only at the exposed surface of the particles, but that carbonation may extend (at least partially) into the bulk of the particles.

Without wishing to be bound by any theory, the inventors believe that both the size variations and the carbonation extending into the bulk are the result of the sliding contact that occurs between particles in the vortex-shaped flow as well as between the particles and the reaction chamber, and is generated by the induced vortex-shaped flow. Where static carbonation processes mainly lead to the formation of an outer envelope of CaCO₃ covering an amorphous (leached) silica layer and an unreacted bulk phase of crystalline material (such as Ca₂SiO₄), and the treatment of particles in mills lead to strong particle collisions and comminution (particle size reduction) due to particles moving in different (e.g. opposing) directions and impacting each other with large impact forces, it is believed that the sliding contact achieved with this invention generates moderate impact forces. As a result the risk to particle disintegration or breaking may be reduced to a minimum and the particle size may be better maintained, while at the same time the exposed surface of the particles is continuously refreshed, i.e. re-activated, by removal of a surface layers. Removal of a surface layers allows for carbonation extending into the bulk of the particles, and advantageously also to form an amorphous (alumina)silica gel layer at the outer surface of the particles, i.e. at the surface of the particles exposed to CO₂. The methods of the present invention are so-called dynamic carbonation methods, i.e. attrition carbonation methods, or soft carbonation methods, and include a vortex-induced carbonation.

In other words, an advantage of the methods of the present disclosure, as well as the reactors of the present invention, is that the particle size of the carbonatable material may be maintained as a result of carbonation. Another advantage is that more reactive carbonated particles, i.e. carbonated particles having a higher reactivity, are obtained.

The degree of carbonation of the particles having a size within the first size range is advantageously controlled by the residence time of these particles in the reaction chamber. Advantageously, the method comprises closing at least the first outlet of the reaction chamber for a period of time sufficient to achieve a predetermined degree of carbonation within the bulk of these particles.

Advantageously, the CO₂-comprising gas comprises between 1 vol. % and 100 vol.% CO₂ (i.e., substantially pure CO₂), preferably between 2 vol.% and 90 vol. %, more preferably between 3 vol. % and 75 vol.%, such as between 4 vol. % and 50 vol.%, or between 5 vol. % and 25 vol. %. It will be understood that a lower CO₂ concentration typically requires a longer carbonation duration, and thus residence time in the reaction chamber, to achieve a desired degree of carbonation. Consequently, the CO₂ concentration in the CO₂-comprising gas depends on the composition of the granular mineral material and on the targeted or predetermined degree of carbonation to be achieved. When the CO₂-comprising gas comprises less than 100 vol.%, the remainder of the gas phase may be any gas considered suitable by the skilled person, for example an inert gas, for example N₂, or air or any other suitable gas.

Advantageously, the granular mineral material has a moisture content comprised between 0 % and 25 % by weight, preferably between 2 % and 20 % by weight, more preferably between 4 % and 20 %, such as between 4 % and 15 %, between 5 % and 10 %, or between 7 % and 8 %, based on the total weight of the granular mineral material. An advantage of the methods of the present invention is that particles having a both a very low or a high moisture content can be carbonated without requiring a drying step prior to supplying the particles to the reaction chamber.

In addition, yet advantageously, the relative humidity in the reaction chamber is between 0 % and 100 %, preferably between 1 % and 90 %, more preferably between 5 % and 80 %, for example between 10 % and 75 %, or between 20 % and 75 %. Since the carbonation reaction is an exothermal reaction, it is known that a certain amount of water present as moisture comprised in the particles and/or in the reaction chamber as relative humidity is required to avoid dehydration of the particles. Consequently, at least one of the moisture content and the relative humidity is higher than 0 %, i.e. the sum of the moisture content and the relative humidity is higher than 0 %.

### Brief description of the figures

Aspects of the invention will now be described in more detail with reference to the appended drawings, wherein same reference numerals illustrate same features and wherein:
Figure 1 schematically shows a first reactor of the invention.
Figure 2 schematically shows a second reactor of the invention.
Figure 3 schematically shows a third reactor of the invention.
Figure 4 shows the cumulative particle size distribution for a very fine fraction of carbonated particles obtained by methods and a reactor of the invention.
Figure 5 shows the FTIR results of carbonated BOF slag in function of carbonation duration.
Figure 6 shows the FTIR results of carbonated AAC in function of carbonation duration.
Figure 7 shows the FTIR results of carbonated AAC in function of rotor speed.
Figure 8 shows the reactivity of carbonated AAC over time in function of the carbonation degree.

### Description of embodiments

The granular mineral material advantageously comprises or substantially consists of particles, for example in the form of a powder. The granular mineral source can comprise, or consist of, any mineral source capable of undergoing carbonation reactions to form a material having supplementary cementitious behaviour.

The granular mineral material can be obtained by milling, crushing and/or grinding a bulk material, so as to obtain a granular mineral material having a desired particle size distribution, for example particles having a desired d50. Advantageously, the particles of the granular mineral material have a particle size distribution having a d50 equal to or lower than 250 µm, preferably equal to or lower than 200 µm, such as equal to or lower than 150 µm, more preferably equal to or lower than 100 µm, more preferably equal to or lower than 75 µm or 50 µm, as measured by means of laser diffraction, in particular according to standard ASTM B822-20 (2020).

The granular mineral material comprises or substantially consists of particles having a size within a first size range. The first size range can be defined as including all dimensions equal to or lower than a set value.. In the light of the present disclosure, the first size range is defined as comprising particle sizes equal to or lower than 100 µm for particles having a density of 3 g/cm³. Such particles are considered in the present disclosure as fine/light/small particles. The skilled person will understand that for heavier particles, i.e. particles having a density higher than 3 g/cm³, the particle size dividing the first size range from the second size range will be lower than 100 µm, whereas for lighter particles, i.e. having a density lower than 3 g/cm³, the dividing particle size will be higher than 100 µm.

Advantageously, at least 10 vol. % of the particles having a size within the first size range have a particle size equal to or lower than 30 µm, preferably equal to or lower than 20 µm, more preferably equal to or lower than 10 µm. Advantageously, at least 60 vol. % of the particles having a size within the first size range have a particle size equal to or lower than 30 µm, preferably equal to or lower than 20 µm, more preferably equal to or lower than 10 µm.

Additionally, yet advantageously, the granular mineral material further comprises particles having a size within a second size range, wherein the sizes comprised within the second size range are higher than the sizes comprised within the first size range. In the light of the present disclosure, the second size range is defined as comprising particle sizes higher (larger) than 100 µm for particles having a density of 3 g/cm³. Such particles are considered in the present disclosure as coarse/large/heavy particles.

The granular mineral material can be obtained by mixing two or more different granular mineral materials, for example - without being limited thereto - the granular mineral materials can have a different origin, a different chemical composition and/or a different granulometry. The granular mineral material can have multimodal particle size distribution, such as a bimodal particle size distribution.

A wide variety of granular mineral materials is suitable for use in this invention. Advantageously, the granular mineral material comprises or substantially consists of an alkaline compound, which refers to a compound having a pH higher than or equal to 8.3. Advantageously, the alkaline compound comprises or substantially consists of an alkali metal, an alkaline earth metal, and combinations thereof. Advantageously, the alkali metal and the alkaline earth metal, when present, are comprised in the alkaline compound as one or more of a silicate phase, a metal oxide and a metal hydroxide. Advantageously, the mineral material comprises calcium and/or magnesium.

Advantageously, the granular mineral material comprises substantially no compounds having hydraulic binding properties, such as, without being limited thereto, a hydraulic binder, a latent hydraulic binder or a pozzolanic material.

Suitable sources of carbonatable granular mineral materials comprise one or more of slags formed as a side product in metallurgical processes, for example slag from ferrous metal production processes, and slag from steel production (referred to as steelmaking slag), more particularly slag from stainless steel production, especially from the production of nickel - chromium stainless steel. Other examples of suitable ferrous metallurgical slags are granulated blast furnace slag, air cooled blast furnace slag, converter slag, basic oxygen furnace (BOF) slag, Linz-Donawitz (LD) slag, electric arc furnace (EAF) slag, ladle slag, argon-oxygen decarburization (AOD) slag, vacuum oxygen decarburization (VOD) slag, or steelmaking slag, in particular stainless-steel slag.

Further suitable sources include slag from production processes of non-ferrous metal substances, such as slag produced as a side product in the production of zinc, copper or lead, as well as waste or secondary raw mineral materials and ashes, in particular bottom ashes and (non-coal) fly ashes. Non-coal fly ashes refer to fly ashes not originating from coal combustion.

Further suitable sources include carbonatable mineral materials occurring in nature, such as magnesium-rich silicates such as olivine, serpentine and talc which can be found in ultramafic rocks such as dunites, peridotites and serpentinites, and calcium containing silicates such as wollastonite.

Advantageously, the granular mineral material used in the present invention comprises at least 20 % by weight, more preferably at least 40 % by weight, most preferably at least 60% by weight of the herein described slags and/or ashes, based on the total weight of the granular mineral material.

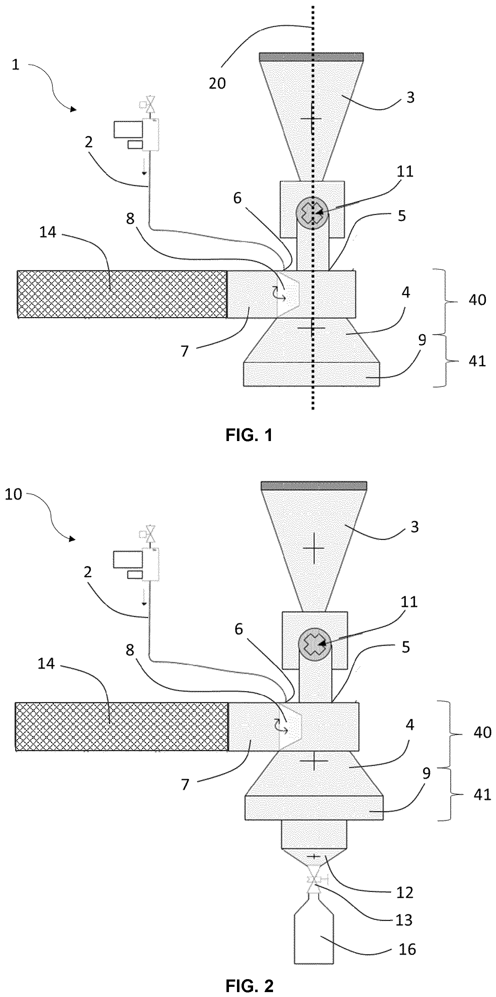

In the following paragraphs, reference is made to the schematically represented reactors of Figs. 1 to 3 according to the invention, as well as to the methods of the invention. In other words, the methods of the invention will be discussed together with the reactor. In the following passages, different features of reactors of the invention are discussed in more detail. Each feature may be combined with any other feature unless clearly indicated to the contrary. In particular, any feature indicated as being preferred or advantageous may be combined with any other feature indicated as being preferred or advantageous.

Fig. 1 schematically shows a first reactor 1 according to the invention. The reactor 1 is particularly suitable for use with particles having a size within the first size range, i.e. a size equal to or lower than 100 µm for a particle density of 3 g/cm³, as measured by laser diffraction, in particular according to standard ASTM B822-20 (2020). Additionally, the reactor 1 is also suited for use with granular mineral materials having a density of 1 to 10 g/cm³.

The reactor comprises a gas supply 2, a carbonatable material supply 3 and a reaction chamber 4. The reaction chamber 4 has an upper portion 40 and a lower portion 41. The gas supply 2 can be any gas supply known in the art for supplying a CO₂-comprising gas. The carbonatable material supply 3 can be any supply suitable for supplying particles known in the art. The reaction chamber 4 further comprises a first outlet 7 positioned in the upper portion 40 of the reaction chamber 4.

The cross-section of the reaction chamber 4 is rounded, preferably circular, at any point of the reaction chamber 4. The surface area of the cross-section (or the diameter of the reaction chamber 4) varies along a central axis (dotted line 20). Advantageously, when the diameter or surface area of the cross-section varies, the variation is a continuous variation, i.e. a gradual variation. A gradual variation, contrary to a sequential variation, prevents the presence of corners in the reaction chamber. Corners in a reaction chamber treating particles are known to be so-called "dead spots", i.e. areas where particles sediment or are trapped without being processed, leading to a loss of material and an inefficient reaction chamber.

More particularly and according to a preferred embodiment of the reaction chamber, the diameter of the lower portion 41 is larger than the diameter of the upper portion 40. Advantageously, the reaction chamber 4 has the shape of a truncated cone, but it will be understood that other shapes are also possible. The inventors have surprisingly discovered that a reaction chamber 4 having the shape of a truncated cone allows for an optimal generation (induction) of a vortex-shaped flow, which is believed to be related to the gradual change in diameter.

Advantageously, the central axis 20 of the reaction chamber 4 extends upright, preferably perpendicular to the earth's surface. In other words, the reaction chamber is advantageously positioned so that the inclination angle with regards to the axis perpendicular to the earth's surface is between 0° (perpendicular to the earth's surface) and 60°, more preferably between 1° and 45°, such as between 5° and 30°.

The methods of the invention using the reactor of Fig. 1 comprise an operation of introducing a CO₂-comprising gas to the reaction chamber, an operation of inducing a vortex-shaped flow to the CO₂-comprising gas, an operation of introducing a granular mineral material, a carbonation and optionally particle separation operation, and an operation of removing at least partially carbonated particles from the reaction chamber.

The inventors have found that the methods of the invention deliver the best results in terms of size-based particle separation and in terms of carbonation, such as the carbonation degree and speed, when the CO₂-comprising gas is supplied and the vortex-inducing means is activated, thereby inducing a vortex-shaped flow to the CO₂-comprising gas, prior to introducing the carbonatable granular material. Such an order of the process operations allows to ensure a good quality and maintenance of the vortex-shaped flow. When the granular material is introduced to the reaction chamber prior to activating the vortex-inducing means, there is a risk of the particles of the granular material settling on or in the vortex-inducing means, thereby hindering its proper activation and thus impacting the induction of the vortex-shaped flow.

A CO₂-comprising gas is supplied from the gas supply 2 to the reaction chamber 4 via a gas inlet 6 of the reaction chamber 4. As shown in Fig. 1, the gas inlet 6 is positioned in the upper portion 40 of the reaction chamber 4. Alternatively, the gas inlet 6 can be provided in the lower portion 41. When the gas inlet 6 is provided in the lower portion 41 of the reaction chamber 4, it is advantageously possible to induce movement to particles that accidentally ended up in the lower portion 41 of the reaction chamber 4. This way an undesired settling of smaller and/or lighter carbonatable particles reactive towards CO₂ (i.e. particles having a first size) at the bottom of the reaction chamber 4 may be counteracted.

Optionally, the reactor 1 further comprises closing means (not shown) configured to close the gas inlet 6 during use of the reactor. This allows to control the amount of gas entering the reaction chamber. This closing means can be any closing means known in the art, such as a valve.

The CO₂ concentration in the CO₂-comprising gas is advantageously optimized in function of the composition of the particles of the granular mineral material, as well as the degree of carbonation to be achieved.

The reactor further comprises a vortex-inducing means 9. The vortex-inducing means can be any means known in the art to generate a vortex-shaped flow, such a rotor, a fan, a venturi and any combinations thereof. Advantageously, the vortex-inducing means 9 is provided (i.e. arranged, positioned) in the lower portion 41 of the reaction chamber 4.

The vortex-inducing means 9 induces a vortex-shaped flow to the CO₂-comprising gas in the reaction chamber 4. The vortex-shaped flow advantageously has a rotation axis parallel to the central axis 20 of the reaction chamber, and is oriented from the lower portion 41 to the upper portion 40 (i.e. "upward"). Advantageously, the rotational flow rate of CO₂-comprising gas in the reaction chamber 4 can be varied in function of the composition, size and weight of the granular (carbonatable) mineral material.

A carbonatable granular mineral material as described hereinabove is supplied from the carbonatable material supply 3 to the reaction chamber 4 via a mineral material inlet 5 of the reaction chamber 4. Advantageously, the mineral material inlet 5 is positioned in the upper portion 40 of the reaction chamber, preferably at a top wall of the reaction chamber 4, more preferably at the top wall and positioned centrally with respect to the vertical axis 20 of the reaction chamber 4. By this positioning of the mineral material inlet 5, the risk of turbulence being created and/or of unwanted particle settling in the reaction chamber 4 can be limited. Alternatively, yet advantageously, the mineral material inlet 5 can be provided in a side wall of the upper portion 40 of the reaction chamber 4 or in the lower portion 41 of the reaction chamber 4.

Optionally, the reactor 1 further comprises closing means 11 configured to close the mineral material inlet 5 during use of the reactor. This allows to control the amount of particles entering the reaction chamber. However, this closing means 11 is an optional feature, and when not present or open during use, a continuous supply of granular mineral material to the reaction chamber 4 is possible. The second closing means 11 can be any closing means known in the art, such as a valve.

Optionally, the granular mineral material is pre-treated prior to its introduction in the reaction chamber. Pre-treatments can improve the reactivity of the particles to CO₂, i.e. can enhance the carbonation reaction. For example, larger particles with a typically lower reactivity towards CO₂ can be removed by sieving the granular mineral material, and/or can be grinded to reduce their size. For example, the pretreatment can comprise modifying the moisture content in the particles to an optimal level for carbonation. Optimizing the moisture content of particles can be performed by processes known in the art, such as drying the particles or exposing them to a humid environment.

The vortex-shaped flow induced to the CO₂-comprising gas entrains the particles in the reaction chamber 4, so that the particles follow a vortex-shaped path in a turbulent gas flow, which exhibits rotational motion and tends to draw the entrained particles towards the reactor chamber's side wall due to the centrifugal forces. The vortex-shaped gas flow generates simultaneously a downward oriented gas flow substantially devoid of any particles in a central part of the rotating gas flow and an upward oriented flow of the entrained particles and gas along the side wall of the reaction chamber 4. The entrained particles in the vortex-shape flow move in the same circular direction and are in sliding contact with each other and with the side wall of the reaction chamber 4. With a "sliding contact" is meant in the present disclosure that the force occurring upon particles impacting or touching each other remains limited, when compared to prior art processes showing frontal collision of particles. Simultaneously with the sliding contact, the entrained particles are contacted with CO₂ and undergo carbonation.

The inventors have surprisingly discovered that this limited impact, i.e. this sliding contact, mainly affects the particle surface while causing minimal particle disintegration or breaking. Consequently, the particle surface of the particles entrained in the vortex-shaped flow is continuously re-activated by removal of surface layers or a part thereof, thereby facilitating CO₂ penetration or diffusion into the bulk of the particles, and thus increasing its effective carbonation yield at a minimal risk of particle disintegration.

The inventors have further noticed that the reactor and methods of the present invention allow to achieve a same degree of carbonation in a shorter time, when compared to static carbonation methods. It is believed to be realised by the increased efficiency of the carbonation reaction which results from the re-activation of the particles' surface.

As a result, carbonation can be obtained both at the exposed surface and within the particles (within the bulk). The degree of carbonation in the bulk of the particles depends on the residence time in the reaction chamber and the concentration of CO₂ in the reaction chamber, and it is possible to carbonate the particles within their core, i.e. carbonation may extend over the entire particle over a substantial part of the thickness of the particle.

In addition, i.e. as a synergetic effect, the size of the carbonated particles is substantially the same and often slightly larger, than the size of the particles prior to carbonation - contrary to prior art processes where the particle size is significantly reduced due to frontal collisions or impact. The possible slight increase in particle size can be contributed to the growth of the particle due to carbonation.

Together with faster carbonation and carbonation within the bulk of the particles, the reactor 1 and methods using the reactor 1 are capable to separate the particles of the granular mineral material in a larger fraction - undergoing minimal carbonation - and a smaller fraction - undergoing carbonation as described hereinabove. This is in particular realised when the mineral material inlet 5 is arranged in the upper portion 40 of the reaction chamber 4 and when the vortex-shaped flow of the CO₂-comprising gas is generated prior to supply of the granular mineral material to the reaction chamber 4. Upon supply of the granular mineral material to the reaction chamber 4 via the mineral material inlet 5, its particles move through the vortex-shaped flow of the CO₂-comprising gas and experience differential drag forces based on their size and density. This differential drag leads to the separation of particles within the flow field according to their size and/or weight. Particles having a size within the second size range (i.e. heavier or larger particles) are entrained with the vortex-shaped gas flow to a (much) lesser extent (i.e. to a much lower height in the reaction chamber) than particles having a size within the first size range (i.e. lighter or smaller particles) which are entrained all the way towards the first outlet 7. Consequently, the particles having a size within the second size range are guided towards the lower portion 41 of the reaction chamber 4 with limited or even substantially no reaction with the CO₂ in the reaction chamber 4 (i.e. with limited or substantially no carbonation).

The reactor 1 further comprises a particle collector 14 configured to receive carbonated particles from the reaction chamber 4 via the first outlet 7. A closing means 8 is provided between the particle collector 14 and the first outlet 7. The first closing means 8 can be any closing means known in the art, such as a valve. The first closing means 8 allows to control the residence time of the particles in the reaction chamber 4, and thus the duration of the carbonation reaction. Advantageously, during carbonation of the particles in the vortex-shaped flow, the first outlet 8 is closed for a duration required to obtain a predefined degree of carbonation. Once the predefined degree of carbonation is obtained, the first outlet 7 is opened by opening the first closing means 8 to remove the carbonated particles from the reaction chamber 4.

More particularly, the residence time of the particles in the reaction can be controlled by one or more of the first closing means 8 (when provided), the rotational flow rate (controlled by the vortex inducing means 9, for example by its speed) and the dimensions and shape of the reaction chamber.

The reaction chamber 4 of Fig. 1, in particular when comprising first 8, second 11 and third closing means, is advantageously gastight.

The reaction chamber 4 can further comprise one or a plurality of ventilators (not shown), in particular configured to reduce build-up of particles (settling of particles) in the reaction chamber 4. It is known that settled particles tend to agglomerate, in particular in the presence of moisture or relative humidity, thereby leading to a lower yield of particles being carbonated, and thus a reduced efficiency of the reactor and methods of the invention. It will be understood that any ventilator known in the art for such a purpose can be used, and that the ventilator(s) is (are) provided (arranged, foreseen, installed) at locations directed towards any areas where particles might settle.

Depending on the reaction conditions and the composition of the particles, a heated environment is advantageously provided. The reactor can comprise a heating means for heating the reaction chamber (not shown). Any heating means known in the art can be used, for example heating mats attached to the outer surface of the reaction chamber. Alternatively or additionally, the reactor can further comprise heating means for the CO₂-comprising gas. Any heating means known in the art can be used to heat the CO₂-comprising gas, for example heating means configured to heat the gas supply 2. When heating means are provided, the reactor further advantageously comprises a temperature control means configured to control the temperature, for example a thermocouple.

The reactor can further comprise control means for controlling the concentration of CO₂ and/or the relative humidity in the reaction chamber (not shown). Control means known in the art can be used to this end.

A sufficient degree of moisture and humidity for the carbonation reactor is advantageously obtained by using particles having a predefined moisture content and/or by providing water in the form of vapour or steam to the reaction chamber to provide an environment having a predetermined relative humidity (not shown). When water is to be introduced to the reaction chamber as humidity (i.e. not being comprised within the particles as moisture), the CO₂-comprising gas advantageously comprises water in the gaseous phase. Alternatively, yet advantageously, the reaction chamber can comprise a third inlet (not shown) fluidly connected to a water supply, the latter being configured to supply water in the form of vapour or steam.

A particular example of a CO₂-comprising gas is a fume gas. When the CO₂-comprising gas is a fume gas, the reaction chamber advantageously comprises a further outlet provided to allow for a continuous flow of fume gas through the reaction chamber. Advantageously, the further outlet is gas permeable, but impermeable to the particles of the granular mineral material.

Fig. 2 shows a second reactor 10 according to the invention. In addition to the reactor 1 of Fig. 1, the second reactor 10 further comprises a particle collector 16 fluidly connected to the reaction chamber 4 via a second outlet 12. The second outlet 12 and the second particle collector 16 are configured to remove particles of the granular mineral material having a size within the second size range (i.e. the fraction of larger/heavier particles) from the reaction chamber 4. In other words, the difference between the reactor 1 of Fig. 1 and the reactor 10 of Fig. 2 is that the reactor 10 of Fig. 2 also comprises an outlet for the heavier particles, i.e., the particles having a size within the second size range.

Advantageously, the second outlet 12 is provided (arranged, installed) in the lower portion 41 of the reaction chamber, in particular at a side of the vortex inducting means 9 opposite to the side thereof oriented towards the first outlet 7. The reactor 10 advantageously further comprises a fourth closing means 13 provided to close the second outlet 12, thereby allowing control of the residence time of these particles in the reaction chamber 4.

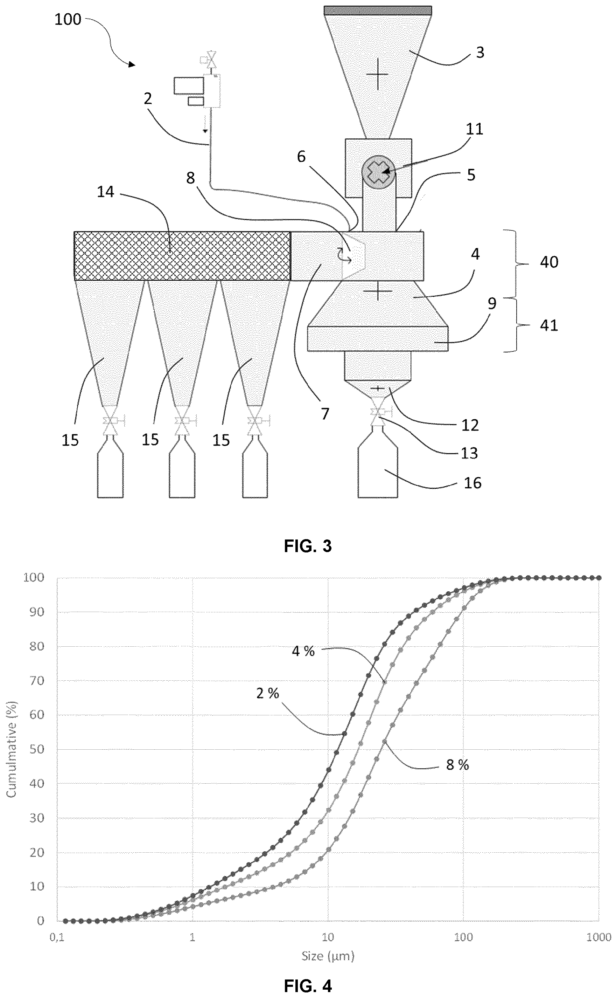

Fig. 3 shows a third reactor 100 according to the invention. In addition to the reactor 10 of Fig. 2, the particle collector 14 comprises a plurality (for example 3) of particle sub-collectors 15. The sub-collectors 15 are provided at an increasing distance from the first outlet 7 of the reaction chamber 4. The sub-collectors 15 can be provided at an equal distance from one another, or the distance between adjacent sub-collectors 15 can vary.

The sub-collectors 15 are configured to sort (i.e. separate) the carbonated particles having a size within the first size range in sub-ranges within the first size range. More particularly, it will be understood that particles having a smaller weight and/or size are capable of travelling over a larger distance from the first outlet 7 of the reaction chamber than particles having a higher weight and/or size. Consequently, lighter (smaller) particles are collected in a sub-collector 15 which is positioned further from the first outlet 7 than the sub-collector 15 wherein heavier (larger) particles are collected.

For example, without being limited thereto, the particle sub-collectors 15 can be provided so as to collect carbonated particles having a size of at most 25 µm separately from carbonated particles having a size higher than 25 µm and at most 50 µm, and separately from carbonated particles having a size higher than 50 µm and at most 100 µm.

### Examples

### Reference example: static carbonation

Basic Oxygen Furnace (BOF) slag was first crushed, and disc milled to < 2 mm, followed by ball milling to obtain a powder having a particle size distribution, having a d50 of approx. 12 µm and a d90 of approx. 150 µm, as measured by a Horiba LA-350 laser diffraction particle size distribution analyser.

The milled BOF slag was mixed with appropriate amounts of deionized water so that the moisture content was 10 %. The moistened mixture was then stored for 48 hours in a sealed plastic container to convert the calcium oxide to calcium hydroxide. The resulting slag was then spread out in trays with a maximum thickness of 3 mm, which were then placed in a COz-controlled reaction vessel. Carbonation was performed for 12 hours at a CO₂ gauge pressure of 0.05 MPa, with a gas comprising < 99.9% pure CO₂, at a temperature of 30 °C and 80 ± 10 % relative humidity. During carbonation, the BOF slag did not move, i.e., it remained static.

The carbonated material was then dried at 70 °C under a nitrogen atmosphere for 12 hours, then milled for 1 minute in a planetary ball mill with 5 stainless steel balls of 30 mm diameter.

After milling, the steps of mixing with deionized water, carbonation, drying and milling were repeated a further three times, at the same conditions as described hereinabove.

The same carbonation sequence was also performed four times without the milling step, i.e. a sequence of mixing with deionized water, carbonation and drying was repeated four times, at the same conditions as described hereinabove.

The total carbon content (TC) was measured prior to carbonation and after each carbonation sequence, using a total carbon element analyser from Analytik Jena (Multi EA 4000). This allowed to evaluate the degree of carbonation. To perform the TC analysis, 300-500 mg of the material was prepared by drying it at 55 °C under a N₂ atmosphere, followed by grinding using an agate mortar and pestle to obtain a powder having an average particle size below 250 µm. Table 1 shows the results for the sequences with and without milling, wherein the TC is expressed in % by weight based on the total dry weight of the tested sample.

**Table 1: Total carbon content in wt.%**

| | **Sequence excl. milling** | **Sequence incl. milling** |
|---|---|---|
| **Prior to carbonation** | 0.62 ± 0.02 | 0.62 ± 0.02 |
| **After sequence 1** | 4.0 ± 0.1 | 4.0 ± 0.1 |
| **After sequence 2** | 4.3 ± 0.1 | 5.0 ± 0.1 |
| **After sequence 3** | 4.6 ± 0.1 | 5.3 ± 0.1 |
| **After sequence 4** | 4.8 ± 0.1 | 5.5 ± 0.1 |

From Table 1 it is clear that by adding an intermittent milling to the carbonation sequences, a higher total carbon content can be achieved. This is attributed to the fact that during carbonation a certain degree of agglomeration of the particles occurs, rendering the surface area of these agglomerated particles less accessible for further carbonation, whereas the intermittent milling reduces the size of the agglomerates, thereby increasing the surface area exposed to (accessible for) carbonation, leading to a higher TC. The intermittent milling works well after the first carbonation step, i.e., after sequence 1, where a significant impact on the degree of carbonation can be seen as testified by the TC increasing from 4.0 to 5.0 %. In the following sequences, the increase in TC for the sequence with milling is comparable to without intermittent milling. Here the increase in TC could be due to the remoistening of the samples, as they dry out during the carbonation process. The intermittent milling after the second carbonation step is too gentle to significantly increase the TC content.

The mineralogical composition of the powdered (<63 µm) BOF slag prior to carbonation and after the four carbonation cycles including intermittent milling, were determined using XRD (PANalytical Empyrean diffractometer) equipped with a CoKα X-ray tube operated at 40 kV and 45 mA. XRD scans were recorded in Bragg-Brentano configuration over an angular range of 5 to 120 °2θ. The step size used was 0.013 °2θ. A 2D solid state PIXcel3D detector with 255 channels covering an active length of 3.35 °2θ was used to record the diffracted X-ray intensity signal. The equivalent counting time per step was 50 s. Quantification of the different phases was done by means of Rietveld analysis using X'Pert Highscore Plus v 4.7a software (PANalytical). A rutile external standard was separately measured and used to quantify the amorphous contents. Table 2 shows the results, expressed as % by weight based on the total weight of the analysed sample before carbonation.

**Table 2: quantitative mineralogical composition (wt. % of each mineral)**

| | **Uncarbonated** | **Carbonation incl. milling** |
|---|---|---|
| **Reactive minerals** | | |
| Larnite (β-Ca₂SiO₄) | 7.7 | 3.1 |
| Calcio-olivine (γ-Ca₂SiO₄) | 4.1 | 1.1 |
| Lime (CaO) | 3.3 | 0 |
| Portlandite (Ca(OH)₂) | 13.3 | 1.5 |
| Amorphous phase | 38.7 | 41.3 |

| **Mainly non-reactive iron containing minerals** | | |
|---|---|---|
| Srebrodolskite (Ca₂(Fe₂₋ₓAlₓO₅) | 17.4 | 11.3 |
| Wustite (FeO) | 6.3 | 4.7 |
| Iron (metal) | 0.4 | 0.4 |
| MgFe₂O₄ | 3.6 | 2.6 |
| Other minor (< 1%) minerals | 3.9 | 1.5 |

| **Carbonation products** | | |
|---|---|---|
| Calcite (CaCO₃) | 1.3 | 47.4 |
| Aragonite (CaCO₃) | - | 3.4 |

The mineralogical analysis shows a decrease in the content of the reactive minerals: larnite (β-Ca₂SiO₄), calcio-olivine (γ-Ca₂SiO₄), lime, portlandite, and possibly part of the amorphous phase. A complete conversion was only observed for free lime (CaO), while for the other minerals a full conversion is likely limited due to precipitation of the carbonation products on the reacting grains, making it difficult to carbonate the grains to the core. It was also noted that during carbonation amorphous silica was formed. This amorphous silica could not be quantified as the BOF sample already contained amorphous phase(s) before carbonation, which may also partly carbonate.

### Example 1

BOF slag was milled to obtain a powder having a particle size distribution, having a d10 of 2-7 µm, a d50 of 20-40 µm and a d90 of 80-100 µm, as measured by a Horiba LA-350 laser diffraction particle size distribution analyser. The initial total carbon content (TC), measured on prepared milled BOF slag according to the procedure of Example 1, was 0.62 ± 0.02 % by weight, based on the total dry weight of the analysed milled BOF slag sample. Table 3 shows the composition of the milled BOF slag in terms of its oxides, as measured by XRF. The loss of ignition (LOI) was determined by ashing the sample at 1000 °C for 4 hours. The ashed sample was used to make a fused bead for ED-XRF analysis by melting the material with Li₂B₄O₇ in a ratio of 1/10. The measured element content was recalculated to oxide content.

**Table 3: oxide composition of BOF slag (in wt. %)**

| **Oxide** | **Amount in BOF slag (wt. %)** |
|---|---|
| CaO | 46.3 |
| Fe₂O₃ | 23.7 |
| SiO₂ | 10.3 |
| MgO | 4.2 |
| Al₂O₃ | 2.2 |
| LOI (%) | 7 |

Fig. 3 shows schematically the reactor used for the experiment, comprising a reaction chamber. The reaction chamber had the shape of an inverted funnel and had a circular cross-section and a volume of approx. 5 L. The inlet fluidly connected to the gas supply, as well as the inlet fluidly connected to the supply for the granular mineral material were provided in the upper portion of the reaction chamber. A rotor as vortex inducing means was provided in the lower portion of the reaction chamber. The rotor speed was set at 2000 rpm, unless mentioned otherwise. The first outlet for fine (i.e., light or small) carbonated particles was also provided in the upper portion of the reaction chamber, and comprised a valve so that the first outlet could be closed for a predetermined duration. The second outlet for coarser (i.e., larger or heavier) particles was provided below the rotor, and also comprised a valve to close the second outlet for a predetermined duration.

A particle collector was positioned at the first outlet and comprised three or two sub-collectors positioned at different distances from the first outlet. The sub-collector positioned closest to the first outlet was configured to collect a fine fraction of the carbonated particles, and the sub-collector furthest away from the first outlet was configured to collect a very fine fraction of the carbonated particles. The sub-collectors together, i.e. the particle collector, were configured to receive or collect all carbonated particles exiting the first outlet of the reaction chamber. The coarse fraction was collected at the second outlet at the bottom of the reactor chamber below the rotor.

Carbonation was performed by introducing commercially purchased CO₂ (purity: > 99.9 %) as CO₂-comprising gas into the reaction chamber at a flow rate of 7 L/min and by switching on the rotor until it reached 2000 rpm. 250-300 g of milled BOF slag was then introduced into the reaction chamber by a dosing screw conveyer and let to carbonate for 30 minutes by closing the first outlet and the second outlet. The moisture content of the milled BOF slag was varied to evaluate the influence thereof on the carbonation reaction. To this end, three BOF slags were used, having a moisture content of 2 %, 4 % and 8 %, respectively.

After 30 minutes the first and the second outlet were opened to remove the carbonated particles from the reaction chamber. The very fine, fine and coarse fraction of the particles after carbonation were analysed for their dry weight %, their moisture content (MC) and their total carbon content (TC) and the results are summarized in Table 4. The dry weight % is a measure for the relative amount of very fine, fine and coarse particles comprised in the total of carbonated particles. The TC is a measure for the degree of carbonation, and thus for the CO₂ uptake. The carbonated particles obtained from the BOF slag having a 2 %, 4% and 8 % moisture content had a TC of 3.45 %, 3.88 % and 3.95 %, respectively, wherein the TC values are the average for all carbonated particles, i.e. the average of the TC of the very fine, fine and coarse particles.

**Table 4: analysis of the fractions as a function of moisture content BOF slag**

| **MC BOF slag** | **Very fine** | | | **Fine** | | | **Coarse** | | |
|---|---|---|---|---|---|---|---|---|---|
| | **Dry wt %** | **MC (%)** | **TC (%)** | **Dry wt %** | **MC (%)** | **TC (%)** | **Dry wt %** | **MC (%)** | **TC (%)** |
| **2 %** | 2.9 | 5.0 | 5.28 | 60.2 | 4.8 | 4.39 | 36.9 | 2.5 | 1.78 |
| **4 %** | 3.5 | 7.3 | 5.29 | 47.8 | 6.0 | 4.87 | 48.7 | 3.8 | 2.81 |
| **8 %** | 5.0 | 8.7 | 4.77 | 35.9 | 7.2 | 4.84 | 59.1 | 6.3 | 3.34 |

From Table 4 it is clear that the TC is the highest for the BOF slags having a moisture content of 4 % and 8 %, and for the smallest particles. Increasing the moisture content of the BOF slag resulted in a higher amount of both very fine and coarse particles.

To analyse this further, the particle size distribution of each fraction was determined by means of laser diffraction. Table 5 shows the d10, d50 and d90 values, and Fig. 4 shows the cumulative particle size distribution for the 'very fine' fraction as a function of the moisture content of the BOF slag, wherein curves "2 %", "4 %" and "8 %" refer to the moisture content of the BOF slag.

**Table 5: particle size distribution of fractions as a function of moisture content BOF slag**

| **MC BOF slag** | **Very fine** | | | **Fine** | | | **Coarse** | | |
|---|---|---|---|---|---|---|---|---|---|
| | **d10** | **d50** | **d90** | **d10** | **d50** | **d90** | **d10** | **d50** | **d90** |
| **2 %** | 1.3 | 12 | 43 | 5.5 | 27 | 83 | 49 | 89 | 135 |
| **4 %** | 1.7 | 17 | 59 | 5.6 | 28 | 77 | 46 | 85 | 130 |
| **8 %** | 4.0 | 25 | 96 | 5.9 | 26 | 70 | 43 | 83 | 130 |

It follows from Table 5 that a lower moisture content leads to lower particle sizes for the very fine fraction, whereas the particle size distribution for the fine and coarse particles does not vary as much. This can be explained by the fact that most moisture is known to be concentrated in the finer particles, making them sticky and thus less easy to separate from other particles.

Table 6 shows the mineralogical composition of the BOF slag having a moisture content of 4 % before carbonation and after carbonation and separation in the three fractions. Only the relevant minerals are shown. It shows that the fine particles mainly consisted of carbonation products (up to nearly 50% of calcite and vaterite) and the reactive minerals (larnite, calcio-olivine, portlandite) are nearly absent. The non-reactive iron rich minerals like wüstite (FeO), magnetite or magnesio-ferrite (Fe₃O₄ - MgFe₂O₄) and srebrodolskite (Ca₂Fe₂₋ₓAlxO₅) mainly occur in the coarser fraction. It was also noted that the amorphous phase present before carbonation is a potential carbonating phase, and that amorphous silica was formed during carbonation of the calcium-silicates (β- and γ-Ca₂SiO₄).

**Table 6: Mineralogical composition of BOF slag before and after carbonation**

| | **Before** | **Very fine** | **Fine** | **Coarse** |
|---|---|---|---|---|
| **Reactive minerals** | | | | |
| Larnite (β-C₂S) | 8.6-9.0 | 1.4 | 2.5 | 3 |
| Calcio-olivine (γ-C₂S) | 9.1-9.6 | 1.5 | 1.0 | 1.0 |
| Free lime (CaO) | 3.1-3.3 | - | - | - |
| Portlandite (Ca(OH)₂) | 15.7-16.5 | 4.3 | 7.0 | 7.7 |
| Amorphous | 34.4-37.6 | 30.3 | 35.4 | 40.7 |

| **Non-reactive iron containing minerals** | | | | |
|---|---|---|---|---|
| Srebrodolskite (Ca₂Fe₃O₅) | 12.7-13.3 | 5.8 | 8.6 | 8.8 |
| Wüstite (FeO) | 6.0-6.4 | 1.6 | 3.6 | 4.5 |
| Magnesioferrite (MgFe₂O₄) / Magnetite (Fe₃O₄) | 2.9-3.1 | 2.7 | 2.6 | 3.3 |

| **Carbonation products** | | | | |
|---|---|---|---|---|
| Calcite (CaCO₃) | 2.5-2.9 | 42.3 | 30.0 | 21.3 |
| Vaterite (CaCO₃) | - | 1.6 | 3.8 | 4.0 |

In a further test, 272 g BOF slag having a moisture content of 8 % was carbonated for 30 minutes and for 60 minutes, using the process parameters as explained hereinabove. Again, the dry weight %, the moisture content (MC) and the total carbon content (TC) were determined for the collected three fractions (Table 7). The particle size distribution, expressed by its d10, d50 and d90 values, was also determined by laser diffraction for each fraction (Table 8).

**Table 7: analysis of the fractions as a function of carbonation duration**

| **Time (min.)** | **Very fine** | | | **Fine** | | | **Coarse** | | |
|---|---|---|---|---|---|---|---|---|---|
| | **Dry wt %** | **MC (%)** | **TC (%)** | **Dry wt %** | **MC (%)** | **TC (%)** | **Dry wt %** | **MC (%)** | **TC (%)** |
| **30** | 14.1 | 7.2 | 4.59 | 48.5 | 6.1 | 4.08 | 37.3 | 6.1 | 3.18 |
| **60** | 14.4 | 6.4 | 4.86 | 43.8 | 5.0 | 4.72 | 41.8 | 5.8 | 3.31 |

**Table 8: particle size distribution of fractions as a function of carbonation duration**

| **Time (min.)** | **Very fine** | | | **Fine** | | | **Coarse** | | |
|---|---|---|---|---|---|---|---|---|---|
| | **d10** | **d50** | **d90** | **d10** | **d50** | **d90** | **d10** | **d50** | **d90** |
| 30 | 3.9 | 24 | 99 | 4.6 | 23 | 79 | 36 | 77 | 126 |
| 60 | 4.2 | 25 | 93 | 5.1 | 21 | 70 | 38 | 78 | 124 |

The carbonated particles obtained after 30 minutes and 60 minutes carbonation had a total TC of 3.82 % and 4.15 %, respectively. In other words, increasing the carbonation duration resulted in an increased total carbon content. The separation into different particle size fractions was very similar for both treatment durations. As can be seen from Table 8, the particle size distribution of the separated fractions was also very similar for both treatment durations.

Fourier Transform Infrared Spectroscopy with Attenuated Total Reflectance (FTIR-ATR, in short FTIR) was performed to determine the degree of polymerisation of the amorphous silica formed during carbonation. During carbonation the reacting (crystalline) silicates polymerize and this can be seen in FTIR data by the increasing wavelength of the Si-O asymmetric stretching (u3) of Qⁿ species, showing the formation of Q³ and Q⁴. Silica polymerization is the linking of isolated SiO₄ tetrahedra to chains of SiO₄ tetrahedra, noted as Q", where n represents the number of bridging oxygen atoms (O) shared between the tetrahedra. The FTIR data were obtained using a Thermo scientific Nicolet^{™} S10 FTIR spectrometer, with a Smart iTX diamond ATR. The frequency range was 400-4000 cm⁻¹, with a data spacing of 0.482 cm⁻¹.

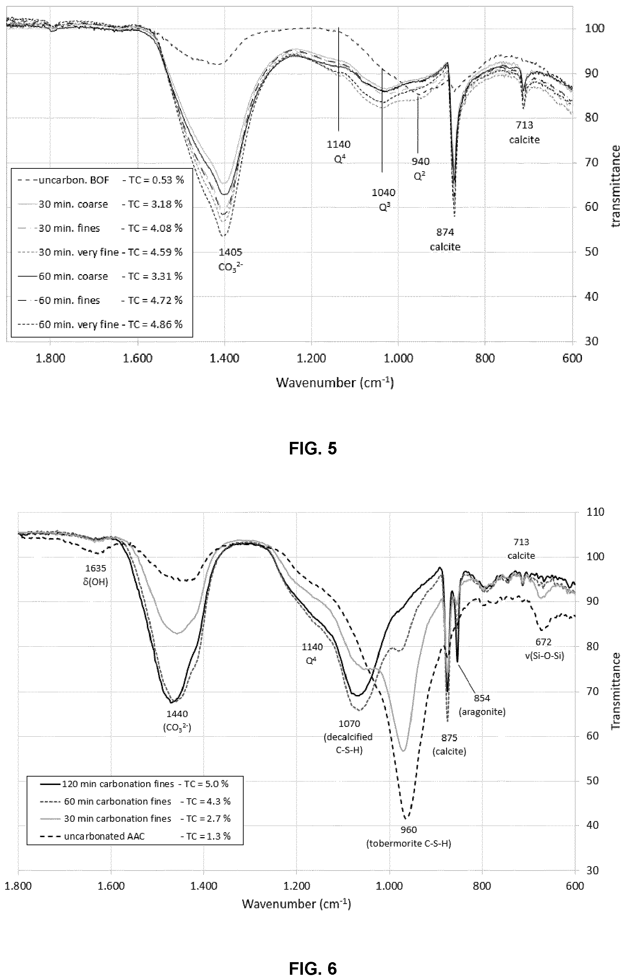

Fig. 5 shows the FTIR data for the very fine ("ultra-fines"), fine ("fines") and coarse ("coarse") particles obtained after 30 minutes and 60 minutes carbonation, as well as the milled BOF slag prior to carbonation ("uncarbonated BOF slag"). The polymerization degree of the amorphous silica formed is comparable for all samples, and thus seems to be independent of the TC.

The impact of the CO₂ content in the CO₂-comprising gas was evaluated by carbonating 268 g of the same BOF slag but having a moisture content of 7 % for 60 minutes according to the previous process parameters. The CO₂-content was varied between 20 %, 50 % and 100 %, with the remaining gas being N₂. Again, the dry weight %, the MC and the TC were determined for the collected very fine, fine and coarse particles (Table 9), as well as the particle size distribution, expressed by its d10, d50 and d90 value (Table 10).

**Table 9: analysis of the fractions as a function of CO₂ content**

| **CO₂ (%)** | **Very fine** | | | **Fine** | | | **Coarse** | | |
|---|---|---|---|---|---|---|---|---|---|
| | **Dry wt %** | **MC (%)** | **TC (%)** | **Dry wt %** | **MC (%)** | **TC (%)** | **Dry wt %** | **MC (%)** | **TC (%)** |
| **20** | 4.4 | 7.7 | 3.78 | 68.3 | 4.4 | 3.51 | 27.2 | 4.0 | 2.35 |
| **50** | 4.2 | 8.1 | 5.75 | 69.1 | 6.9 | 4.41 | 26.7 | 5.6 | 3.23 |
| **100** | 3.1 | 11.6 | 4.99 | 70.6 | 5.9 | 3.97 | 26.3 | 4.1 | 2.84 |

**Table 10: particle size distribution of fractions as a function of CO₂ content**

| **CO₂ (%)** | **Very fine** | | | **Fine** | | | **Coarse** | | |
|---|---|---|---|---|---|---|---|---|---|
| | **d10** | **d50** | **d90** | **d10** | **d50** | **d90** | **d10** | **d50** | **d90** |
| **20** | 1.7 | 7.1 | 16 | 1.7 | 9.8 | 29 | 5.6 | 27 | 67 |
| **50** | 1.4 | 6.0 | 15 | 2.1 | 8.8 | 27 | 4.1 | 24 | 71 |
| **100** | 2.6 | 6.7 | 17 | 1.9 | 9.9 | 40 | 5.9 | 30 | 87 |

The carbonated particles obtained from an increasing CO₂ content had a total TC of 3.2 % (20 %), 4.1 % (50 %) and 3.7 % (100 %), respectively. This seems to indicate that a low CO₂ content (20 %) lowers the carbonation rate while higher contents (50-100%) increase the carbonation rate.

The impact of the rotor speed was evaluated by carbonating 253 g of the same BOF slag having a moisture content of 7 % for 30 minutes using the previous process parameters, wherein two rotor speeds were tested, 2000 rpm and 3000 rpm. Again, the dry weight %, the MC and TC were determined for the collected very fine, fine and coarse particles (Table 11), as well as the particle size distribution, expressed by its d10, d50 and d90 value (Table 12).

**Table 11: analysis of the fractions as a function of rotor speed**

| **Speed (rpm)** | **Very fine** | | | **Fine** | | | **Coarse** | | |
|---|---|---|---|---|---|---|---|---|---|
| | **Dry wt %** | **MC (%)** | **TC (%)** | **Dry wt %** | **MC (%)** | **TC (%)** | **Dry wt %** | **MC (%)** | **TC (%)** |
| **2000** | 1.1 | 7.2 | 5.72 | 71.6 | 5.0 | 4.08 | 26.7 | 5.6 | 3.00 |
| **3000** | 0.84 | 14.6 | 6.35 | 84.7 | 6.3 | 4.57 | 14.4 | 4.0 | 2.76 |

**Table 12: particle size distribution of fractions as a function of rotor speed**

| **Speed (rpm)** | **Very fine** | | | **Fine** | | | **Coarse** | | |
|---|---|---|---|---|---|---|---|---|---|
| | **d10** | **d50** | **d90** | **d10** | **d50** | **d90** | **d10** | **d50** | **d90** |
| **2000** | 1.9 | 7.5 | 19 | 1.9 | 9.7 | 33 | 6.0 | 29 | 74 |
| **3000** | 1.4 | 5.8 | 15 | 2.0 | 9.4 | 30 | 9.5 | 28 | 75 |

The carbonated particles obtained from an increasing rotor speed had a total TC of 3.80 % (2000 rpm) and 4.32 % (3000 rpm). This indicates that the carbonation rate can be increased by increasing the rotor speed. The higher rotor speed is accompanied by the production of more fines, i.e., about 73 % fines and very fines were produced with a rotor speed of 2000 rpm, and 85 % with a rotor speed of 3000 rpm. Fine particles generally have a higher specific surface area, which may explain the higher carbonation rate.

### Example 2

Cement mortars were made according to standard EN-196-1:2016 by replacing 30 % thereof by limestone filler (Cement No. 1), the static carbonated BOF of Reference Example (Cement No. 2), and the fine particle fraction (Cement No. 3) and the coarse particle fraction (Cement No. 4) obtained in Example 1 by carbonating 360 g BOF slag having a moisture content of 8 % for 30 minutes at a rotor speed of 2000 rpm, using 7 L/min dry commercially purchased CO₂ (purity: > 99.9 %). The cement mortar without replacing 30 % as described hereinabove was also tested (Cement No. 5). The coarse particle fraction of Cement No. 4 was milled before adding it to the cement mortar to obtain a d50 similar to that of the fine particle faction used in Cement No. 3. Table 13 shows the particle size distribution (PSD) and the TC of the substitute materials used.

**Table 13: PSD and TC of the materials used to make cement mortars (EN-196-1:2016)**

| | **d10 (µm)** | **d50 (µm)** | **d90 (µm)** | **TC (%)** |
|---|---|---|---|---|
| **Limestone** | 1.6 - 1.8 | 8.0 - 9.5 | 44 - 45 | 12 |
| **Static BOF** | 0.71 - 0.77 | 8.4 - 12 | 91 - 140 | 5.66 |
| **Fine fraction** | 3.2 - 3.9 | 11 - 12 | 34 - 45 | 4.37 |
| **Milled coarse fraction** | 1.2 | 12 | 118 | 3.04 |

The compressive strength of the cement mortars was measured according to test standard EN-196-1:2016 at different time intervals. The strength activity index (SAI) was calculated as the compressive strength of the cement with substitute material (resp. the compressive strength of Cement Nos. 1, 2, 3 and 4) divided by the compressive strength of the cement without substitute material (Cement No. 5). For the Cement No. 5, i.e., without any substitute material, the SAI is 100 %. Table 14 shows the results of the strength test (compressive strength) and the SAI.

**Table 14: strength (MPa) and SAI (%) for cement mortars**

| *(Compr. = compressive strength)* | | | | | | |
|---|---|---|---|---|---|---|
| **Time** | | **Cement No. 1** | **Cement No. 2** | **Cement No. 3** | **Cement No. 4** | **Cement No. 5** |
| 2 days | Compr. | 30.5 ± 1.1 | | 31.0 ± 0.8 | 28.8 ± 0.8 | 46.5 ± 0.2 |
| | SAI | 65.6 | | 66.7 | 61.9 | 100 |
| 7 days | Compr. | 43.4 ± 1.8 | 44.9 ± 1.5 | 46.7 ± 0.8 | 43.8 ± 0.9 | 61.2 ± 2.5 |
| | SAI | 70.8 | 73.4 | 76.4 | 71.6 | 100 |
| 28 days | Compr. | 51.5 ± 0.3 | 54.5 ± 1.0 | 56.6 ± 1.6 | 53.9 ± 1.0 | 73.3 ± 1.6 |
| | SAI | 70.3 | 74.4 | 77.3 | 73.6 | 100 |
| 90 days | Compr. | 55.3 ± 0.3 | | 59.0 ± 0.7 | 57.7 ± 1.1 | 74.3 ± 4.2 |
| | SAI | 74.4 | | 79.4 | 77.7 | 100 |

Looking at the compressive strength after 28-days, it is clear that the Cement paste No. 4, i.e., comprising the fine carbonated BOF fraction obtained by the inventive methods and reactor, reached the highest strength, whereas the limestone comprising cement (Cement No. 1) showed the lowest values. The higher compressive strength and corresponding strength activity index (SAI) for the static reference cement (Cement No. 2) when compared to Cement No. 4 (comprising the milled coarse fraction of BOF slag carbonated according to the invention) can be explained by the longer carbonation time for the static process, which resulted in a higher carbonation degree as testified by its higher TC content (Table 15). This Example confirms that dynamic carbonation of the BOF slag provides a good supplementary cementitious material (SCM).

### Example 3

Autoclaved aerated concrete (AAC) having a particle size distribution, having a d10 of 3.4 µm, d50 of 10-20 µm and a d90 of 90-160 µm as measured by laser diffraction was also carbonated. The AAC material had the following oxide content (Table 15), which was measured in the same way as in Example 1.

**Table 15: oxide composition of AAC slag**

| **Oxide** | **Amount in AAC (wt. %)** |
|---|---|
| CaO | 23-25 |
| Fe₂O₃ | 0.88-0.96 |
| SiO₂ | 59-62 |
| MgO | < 1 |
| Al₂O₃ | 1.8-2.0 |
| LOI (%) | 10-12 |

A same amount of this material was carbonated for 30 minutes using the apparatus of Example 1, with a rotor speed of 2000 rpm, and using commercially purchased CO₂ (purity: > 99.9 %), wherein the moisture content of the AAC material was varied between 4 % and 21 %. The initial (as received) AAC moisture content was 15 %. Table 16 shows the dry weight % (in wt.%) of the very fine, fine and coarse fractions, as well as the TC and the d10, d50 and d90 value for each fraction. All analysis was performed like explained in Example 1.

**Table 16: dry weight %, PSD and TC as a function of moisture content AAC material**

| **Moisture content** | **Fraction** | **Dry weight %** | **d10** | **d50** | **d90** | **TC (%)** |
|---|---|---|---|---|---|---|
| 21 % | Very fine | 5.4 | 3.9 | 15 | 57 | 2.59 |
| | Fine | 43.3 | 4.2 | 14 | 88 | 2.22 |
| | Coarse | 51.3 | 46 | 116 | 220 | 1.70 |
| 17 % | Very fine | 4.2 | 3.6 | 15 | 55 | 3.06 |
| | Fine | 53.4 | 4.1 | 15 | 89 | 2.06 |
| | Coarse | 42.4 | 44 | 117 | 217 | 1.58 |
| 15 % | Very fine | 3.8 | 3.2 | 14 | 59 | 3.22 |
| | Fine | 53.5 | 4.2 | 15 | 84 | 2.25 |
| | Coarse | 42.6 | 55 | 125 | 226 | 1.69 |
| 8 % | Very fine | 2.5 | 2.9 | 8.3 | 97 | 2.76 |
| | Fine | 63.8 | 4.4 | 20 | 106 | 2.03 |
| | Coarse | 33.7 | 69 | 170 | 284 | 1.60 |
| 4 % | Very fine | 1.9 | 2.4 | 6.3 | 44 | 3.16 |
| | Fine | 62.6 | 4.6 | 19 | 100 | 2.29 |
| | Coarse | 35.6 | 77 | 166 | 281 | 1.80 |

The carbonated particles obtained from a decreasing moisture content had a total TC of 1.97 % (21 % moisture), 1.90 % (17 % moisture), 2.05 % (15 % moisture), 1.90 % (8 % moisture) and 2.13 % (4 % moisture). Based on the results, there seems to be no significant impact of the moisture content on the carbonation degree. However, a lower moisture content resulted in a higher fraction of fine particles. The inventors believe that this is because a dried AAC material is more prone to attrition when it is dryer, i.e., less water on the surface of the particles, and the fines are less likely to stick to larger particles or to agglomerate into larger particles.

The ACC with a 10 % moisture content was also subjected to the same carbonation process, wherein the carbonation duration was varied between 30 minutes, 60 minutes and 120 minutes. Table 17 shows the dry weight % (in wt.%) of the very fine, fine and coarse fractions, as well as the TC and the d10, d50 and d90 value for each fraction.

**Table 17: dry weight %, PSD and TC as a function of carbonation duration**

| **Carbonation duration** | **Fraction** | **Dry weight %** | **d10** | **d50** | **d90** | **TC (%)** |
|---|---|---|---|---|---|---|
| 30 min. | Very fine | 3.7 | 2.7 | 7.2 | 18 | 4.89 |
| | Fine | 78.8 | 3.4 | 12 | 81 | 2.70 |
| | Coarse | 17.5 | 15 | 96 | 186 | 2.22 |
| 60 min. | Very fine | 2.4 | 2.4 | 6.3 | 19 | 4.30 |
| | Fine | 67.7 | 3.6 | 11 | 61 | 4.35 |
| | Coarse | 30.0 | 30 | 93 | 180 | 2.28 |
| 120 min. | Very fine | 2.2 | 2.9 | 6.9 | 26 | 4.53 |
| | Fine | 78.8 | 4.5 | 13 | 99 | 4.99 |
| | Coarse | 19.1 | 19 | 95 | 186 | 2.68 |

The carbonated particles obtained from an increasing carbonation duration had a total TC of 2.70 % (30 min.), 3.73 % (60 min.), and 4.54 % (120 min.), respectively. From Table 19, it is clear that a longer carbonation duration increases the carbonation degree. Fig. 6 shows the FTIR results of fine fraction for the three carbonation durations, as well as for the uncarbonated AAC, from which it is clear that the duration also has a significant positive effect on the polymerisation degree of the silica. FTIR was performed as explained in Example 1.

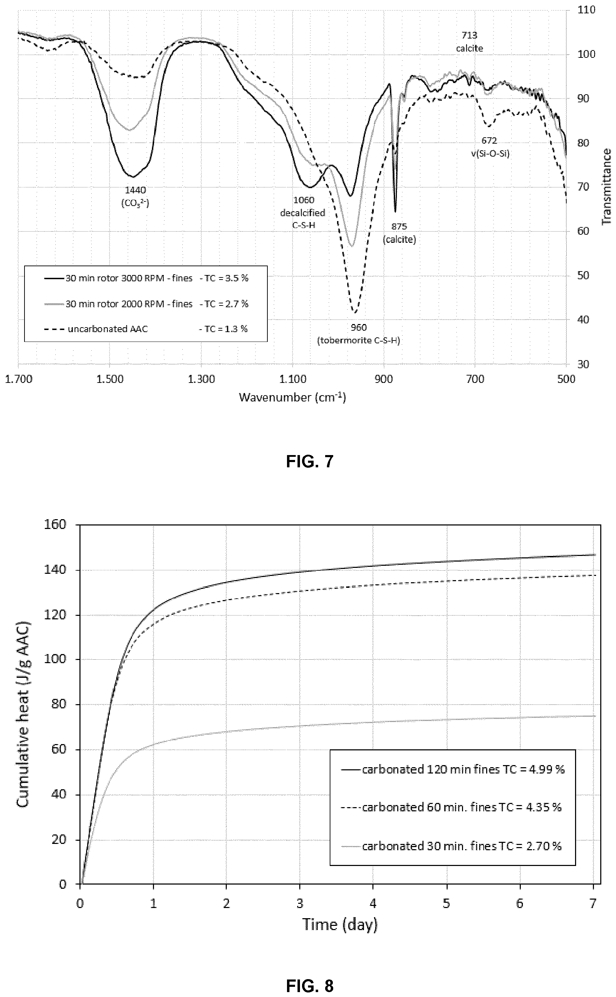

The impact of the rotor speed was also tested for a carbonation duration of 30 minutes and a rotor speed of 2000 rpm and 3000 rpm. Table 18 shows the results and Fig. 7 the FTIR results for the fine fraction.

**Table 18: dry weight %, PSD and TC of carbonated particles in function of moisture content of AAC material**

| **Rotor speed (rpm)** | **Fraction** | **Dry weight %** | **d10** | **d50** | **d90** | **TC (%)** |
|---|---|---|---|---|---|---|
| 2000 | Very fine + fine | 82.5 | 3.3 | 12 | 78 | 2.80 |
| | Coarse | 17.5 | 15 | 96 | 186 | 2.22 |
| 3000 | Very fine + fine | 86.6 | 3.6 | 12 | 77 | 3.45 |
| | Coarse | 13.4 | 16 | 85 | 167 | 2.13 |

The carbonated particles obtained from an increasing rotor speed had a total TC of 2.70 % (2000 rpm) and 3.27 % (3000 rpm), respectively. By increasing the rotor speed, the obtained amount of carbonate fine particles is slightly larger. Increasing the rotor speed also allowed to obtain a higher degree of carbonation (higher TC), which can be explained by the larger surface area of the finer particles created by the milling effect of the higher rotor speed. The FTIR results confirm the higher degree of carbonation and the higher polymerisation degree of the silica for the material carbonated at a rotor speed of 3000 rpm.

The reactivity of the carbonated fine AAC (Table 17) was determined by the R3 test. The R3 test is a method used to evaluate the pozzolanic reactivity of supplementary cementitious materials (SCMs). The test is based on the correlation between the chemical reactivity of puzzolans in a simplified system and the compressive strength of cement blends in standard mortar. The simplified system consists of the material to be tested, portlandite and limestone pastes with sulphate and alkali levels adjusted to reproduce the reaction environment of hydrating blended cements. The pastes with the carbonated AAC were hydrated for 7 days at 40 °C. The chemical reactivity of the material is obtained by measuring the heat release during reaction using isothermal calorimetry. Fig. 8 shows the results, from which an increase in reactivity was noticed for higher carbonation degrees (represented by higher TC values).

## Claims

1. A reactor (1, 10, 100) for carbonating a granular mineral material comprising:
- a reaction chamber (4) having a rounded cross-section and having an upper portion (40) and a lower portion (41);
- a gas supply (2) configured to supply a CO₂-comprising gas to the reaction chamber (4);
- a carbonatable material supply (3) configured to supply a granular mineral material to the reaction chamber (4), wherein the granular mineral material comprises particles having a size within a first size range and optionally particles having a size within a second size range, wherein the first size range comprises sizes smaller than the sizes comprised within the second size range, wherein the particle size is measured by laser diffraction;
wherein the reaction chamber (4) comprises:
- a first inlet (5) fluidly connected to the carbonatable material supply (3);
- a second inlet (6) fluidly connected to the gas supply (2);
- a first outlet (7) configured to remove at least partially carbonated particles having a size within the first size range from the reaction chamber (4); and
- a vortex inducing means (9) configured to, in use, induce a vortex-shaped flow to the CO₂-comprising gas in the reaction chamber (4) and to entrain the particles of the granular mineral material having a size within the first size range from the first inlet (5) towards the first outlet (7).

2. The reactor (1, 10, 100) according to claim 1, wherein the first size range comprises particle sizes equal to or lower than 100 µm for a granular mineral material having a density of 3 g/cm³, wherein the particle size is measured by means of laser diffraction.

3. The reactor (1, 10, 100) according to any one of the preceding claims, further comprising a first closing means (8) configured to, in use, close the first outlet (7).

4. The reactor (1, 10, 100) according to any one of the preceding claims, wherein the first outlet (7) is arranged in the upper portion (40) of the reaction chamber (4).

5. The reactor (1, 10, 100) according to any one of the preceding claims, wherein the first inlet (5) is arranged in the upper portion (40) of the reaction chamber (4).

6. The reactor (1, 10, 100) according to any one of the preceding claims, wherein the vortex inducing means (9) is arranged in the lower portion (41) of the reaction chamber (4).

7. The reactor (10, 100) according to any one of the preceding claims, wherein the reaction chamber (4) further comprises a second outlet (12) configured to remove particles of the granular mineral material having size within the second size range from the reaction chamber (4).

8. The reactor (10, 100) according to claim 7, wherein the second outlet (12) is arranged in the lower portion (41) of the reaction chamber (4).

9. The reactor (1, 10, 100) according to any one of the preceding claims, further comprising a second closing means (11) configured to, in use, close the first inlet (5), and/or a third closing means configured to, in use, close the second inlet (6).

10. The reactor (10, 100) according to any one of the preceding claims, further comprising a particle collector (14) fluidly connected to the first outlet (7) of the reaction chamber (4), wherein the particle collector (14) comprises a plurality of particle sub-collectors (15) arranged at increasing distance from the first outlet (7) of the reaction chamber (4).

11. The reactor (1, 10, 100) according to any one of the preceding claims, wherein the upper portion of the reaction chamber has a first surface area and the lower portion of the reaction chamber has a second surface area, and wherein the first surface area is smaller than the second surface area.

12. The reactor (1, 10, 100) according to any one of the preceding claims, further comprising a water supply configured to supply water in the form of water vapour or steam to the reaction chamber (4), and wherein the reaction chamber further comprises a third inlet fluidly connected to the water supply (4).

13. A method for carbonating particles of a granular mineral material comprising using a reactor (1, 10, 100) of any one of the preceding claims:
- Supplying a CO₂-comprising gas to the reaction chamber (4);
- Inducing a vortex-shaped flow to the CO₂-comprising gas;
- Supplying a granular mineral material to the reaction chamber (4), wherein the granular material comprises particles having a size within a first size range and optionally particles having a size within a second size range, wherein the first size range comprises sizes smaller than the sizes comprised within the second size range, wherein the particle size is measured by laser diffraction, thereby entraining at least the particles of the granular mineral material having a size within the first size range in the vortex-shaped flow and contacting them with CO₂, thereby forming carbonated particles; and
- Removing the carbonated particles from the reaction chamber (4),
wherein the particles entrained in the vortex-shaped flow are in sliding contact with one another and with the reaction chamber (4).

14. The method according to claim 13 and using a reactor according to claim 3, further comprising closing the first outlet of the reaction chamber for a period of time sufficient to achieve a predetermined degree of carbonation into the bulk of the particles having a size within the first size range.

15. The method according to any one of claims 13 to 14, wherein the granular mineral material has a moisture content comprised between 0 % and 25 % by weight, preferably between 2 % and 20 % by weight, based on the total weight of the granular mineral material, wherein the relative humidity in the reaction chamber is between 0 % and 100 %, preferably between 5 % and 80 %, more preferably between 20 % and 75 %, and wherein at least one of the moisture content of the granular mineral material and the relative humidity in the reaction chamber is higher than 0 %.
